# EUROPEAN PATENT APPLICATION

(11) **EP 4 783 747 A1**
(43) Date of publication of application: **29.07.2026**
(21) Application number: 25154031.6
(22) Date of filing: 27.01.2025
(51) Int. Cl.: H05B 47/28, G01K 1/20

(54) **LIGHTING SYSTEM COMPRISING ELECTRICAL COMPONENT WITH INTERNAL TEMPERATURE SENSOR AND METHOD FOR DETERMINING AN AMBIENT TEMPERATURE OF AN ELECTRICAL COMPONENT OF A LIGHTING SYSTEM**

(71) Applicant: Tridonic GmbH & Co. KG, 6851 Dornbirn (AT)
(72) Inventor: Zengerle, Thomas, 6851 Dornbirn (AT); Hüttinger, Ulrich, 6851 Dornbirn (AT); Mayrhofer, Markus, 6851 Dornbirn (AT)
(74) Representative: Rupp, Christian

(57) **Abstract**

The present invention provides a lighting system (100). The lighting system (100) comprises an electrical component (1) with an internal temperature sensor (2) for obtaining an internal temperature of the electrical component (1) resulting from an operation of the electrical component (1) in an on-state of the electrical component (1), The lighting system (100) comprises a data processing unit (3). The data processing unit (3) is configured to determine, using a temperature measured by the temperature sensor (2) of the electrical component (1), an ambient temperature of an area in which the lighting system (100) is installed. The present invention further provides a method for determining an ambient temperature of an electrical component of a lighting system.

## Description

The present invention relates to a lighting system comprising an electrical component with internal temperature sensor and a method for determining an ambient temperature of an electrical component of a lighting system

A conventional lighting system comprises luminaires for providing a desired lighting in an area, such as a room or building area in which the lighting system is installed. For measuring an ambient temperature, i.e. a temperature within the area in which the lighting system is installed, typically separate temperature sensors may be provided. That is, for measuring the room temperature of a room in which the lighting system is provided, temperature sensors may be provided as separate units in addition to the luminaires of the lighting system. Such temperature sensors provide additional installation effort and additional costs for installing the lighting system in the area.

Therefore, it is an object of the present invention to provide a lighting system configured for measuring the ambient temperature of the area in which it is installed that is improved with regard to the installation effort and costs of the means for such ambient temperature measurement.

This and other objects, which become apparent upon reading the following description, are solved by the subject-matter of the independent claim. The dependent claims refer to preferred embodiments of the invention.

According to a first aspect of the invention, a lighting system is provided. The lighting system comprises an electrical component with an internal temperature sensor for obtaining an internal temperature of the electrical component resulting from an operation of the electrical component in an on-state of the electrical component. The lighting system comprises a data processing unit. The data processing unit is configured to determine, using a temperature measured by the internal temperature sensor of the electrical component, an ambient temperature of an area in which the lighting system is installed.

In other words, the present invention proposes using an internal temperature sensor of an electrical component of a lighting system for determining the ambient temperature of an area in which the lighting system is installed, instead of using one or more actual temperature sensors as one or more additional electrical components of the lighting system. Since the internal temperature sensor is already part of the electrical component no additional electrical component in the form of a separate temperature sensor is required for measuring the ambient temperature of the lighting system. Thus, the lighting system of the first aspect allows reducing the installation effort and costs with regard to measuring the ambient temperature of the area in which the lighting system is installed.

The ambient temperature of the area in which the lighting system is installed may be the ambient temperature of the area at a location where the electrical component is located when the lighting system is installed in the area.

The internal temperature sensor may be arranged within a housing of the electrical component. The internal temperature of the electrical component may be understood as the temperature inside, e.g. inside the housing, of the electrical component. The internal sensor may be part of control means, such as a microcontroller or application specific integrated circuit (ASIC), of the electrical component. The internal temperature sensor of the electrical component is configured to measure the internal temperature of the electrical component resulting from the operation of the electrical component in an on-state of the electrical component in order to allow ensuring that the electrical component is not damaged during its operation as a result of too high internal temperatures inside the electrical component. Although the internal temperature sensor is provided in the electrical component for measuring the internal temperature resulting from the operation of the electrical component in the on-state of the electrical component, the internal temperature sensor may be configured to measure temperature irrespective of the electrical component's state. For example, the internal temperature sensor may measure temperature and, thus, the internal temperature of the electrical component when the electrical component is in a standby-state or off-state. The term "mode" may be used as a synonym for the term "state". That is, the terms "on-mode", "standby-mode" and "off-mode" may be used as synonyms for the terms "on-state", "standby-state" and "off-state", respectively.

The internal temperature sensor is not a separate electrical component of the lighting system configured to measure ambient temperature of the lighting system.

The data processing unit may be or may comprise at least one of a controller, microcontroller, processor, microprocessor, application specific integrated circuit (ASIC), and field programmable gate array (FPGA).

The lighting system may be a lighting system for an indoor area, such as a room or building area, or an outside area, such as a street. The term "electrical device" may be used as a synonym for the term "electrical component".

In case the electrical component is not arranged in another device, e.g. in a housing of another device, then the ambient temperature (of the area in which the lighting system may be installed) that is determinable by the data processing unit using the temperature measured by the internal temperature sensor of the electrical component may be the temperature outside the electrical component. This may be for example the case when the electrical component is a motor for blinds. In case the electrical component is arranged inside another device, such as a luminaire, then the aforementioned temperature outside of the electrical component may be understood to be the temperature outside the other device. This may be for example the case when the electrical component is a lighting means driver being arranged inside a luminaire. Then the temperature outside the lighting means driver may be understood as the temperature outside the luminaire.

The data processing unit may be configured to determine that, in case the electrical component is in a current state for a time smaller than a time threshold, the ambient temperature equals the measured temperature corrected by an offset value.

In case thermal energy provided by the electrical component being in the state for the time being smaller than the time threshold is smaller than a thermal energy threshold and, thus, negligible, the offset may be zero. For example, such a state may be a standby-state, when the thermal energy provided by the electrical component being in the standby-state is smaller than the thermal energy threshold and, thus, negligible. The current state of the electrical component is the state of the electrical component at a current point in time. The time threshold may be such that within a time equal to or greater than the time threshold the electrical component may settle thermally.

The data processing unit may be configured to determine that, when the electrical component is in an off-state for a time equal to or greater than the time threshold, the ambient temperature equals the measured temperature.

The off-state of the electrical component may be understood as a state of the electrical component in which the electrical component does not provide thermal energy and, thus, does not contribute to the internal temperature of the electrical component in addition to the temperature of the area (i.e. environment) in which the lighting system may be installed. The time threshold may equal a time after which the internal temperature of the electrical component has equalized to a temperature of the area (i.e. environment) in which the lighting system may be installed (i.e. a temperature outside the electrical component), the time starting at a point in time when operation of the electrical component in an operation state of maximum thermal energy has stopped. The operation state of maximum thermal energy is the operation state among operations states of the electrical component in which the electrical component provides maximum thermal energy.

The determined ambient temperature at a current point in time may equal the actual ambient temperature of a previous point in time, wherein the time difference between the current point in time and the previous point in time is due to the internal temperature of the electrical component not necessarily instantly adapting to a change of the temperature outside the electrical component. That is, the temporal course of the temperature measured by the internal temperature sensor may follow the temporal course of an temperature outside the electrical component by a time delay, wherein the time delay depends on the implementation of the electrical component, such as shape of the electrical component, position within the electrical component (e.g. within the housing of the electrical component), material(s) used for implementing the electrical component (e.g. thermal conductivity of the used material(s)), etc. In case the electrical component 1 is arranged within another device, such as a luminaire, the temperature outside the electrical component may be understood as the temperature outside the other device, e.g. temperature outside the luminaire. In this case, the aforementioned time delay may depend in addition on the implementation form of the other device (e.g. luminaire), such as shape of the other device, position of the electrical component within the other device (e.g. within a housing of the other device), material(s) used for implementing the other device (e.g. thermal conductivity of the used material(s)), etc.

The data processing unit may be configured to determine that the electrical component is in the off-time for the time equal to or greater than the time threshold by measuring time, and/or by evaluating a temporal increase of the measured temperature after the state of the electrical component changes from the off-state to the on-state.

The data processing unit may be configured to use as the offset value a temperature value that depends on a current state of the electrical component, one or more directly previous states of the electrical component, a time during which the electrical component is in the current state, and a time during which the electrical component was in a respective previous state of the one or more directly previous states.

A state of the electrical component may comprise an on-state and off-state and optionally a standby-state. A state of the electrical component may comprise as the on-state one or more different operation states. For example, the one or more different operation states may be different dimming level states in case the electrical component is a lighting means driver. One or more directly previous states means that the one or more previous states are previous to the current state without any other state being in between the current state and the one or more previous states. The one or more previous states being multiple states are consecutive multiple states.

Optionally, the lighting system is a luminaire, and the electrical component and the data processing unit are a part of the luminaire.

The electrical component and the data processing unit may be arranged inside a housing of the luminaire. The luminaire may be any known type of luminaire.

Optionally, the electrical component is a part of a luminaire, and the data processing unit is a part of a lighting management system configured to control the luminaire.

The electrical may be arranged inside a housing of the luminaire The lighting management system is external to the luminaire. The lighting system comprises the lighting management system.

The data processing unit may be configured to receive a measured temperature of one or more additional electrical components arranged in an area in which the luminaire is installed. Each of the one or more additional electrical components comprises an internal temperature sensor for obtaining an internal temperature of the respective electrical component resulting from an operation of the respective electrical component in an on-state. The data processing unit may be configured to determine, when the luminaire is installed in the area, the ambient temperature of the area by computing a mean of measured temperatures of the electrical component and the one or more additional electrical components.

The lighting system may comprise the one or more additional electrical components. The description of the electrical component may be correspondingly valid for the one or more additional electrical components. The measured temperature of each of the electrical component and the one or more additional electrical components is the temperature measured by the internal temperature sensor of the respective electrical component.

Optionally, the data processing unit is configured to determine that the ambient temperature of the area equals the mean of the measured temperatures, the mean being corrected by a common offset value. The data processing unit may be configured to determine that the ambient temperature of the area equals the mean of the measured temperatures each being corrected by a respective offset value.

That is, according to an alternative, the mean may be computed and then the computed mean may be corrected by the common offset value. According to another alternative, each of the measured temperatures may be corrected by a respective offset value (i.e. an offset value for the temperature measured by the internal temperature sensor of the respective electrical component) and then the mean may be computed of the corrected measured temperatures.

Optionally, the data processing unit is configured to determine presence of a heat source at a location of one of the electrical component and the two or more additional electrical components in the area in case a temporal course of the measured temperature of said one electrical component measured in a state of said one electrical component differs from the temporal course of the measured temperature of each of the other electrical components of the electrical component and the two or more additional electrical components measured in the same state of the respective electrical component, wherein the electrical component and the two or more additional electrical components being each configured to provide, when being in the state, same thermal energy.

The state is for example a standby-state.

Optionally, the data processing unit is configured to use the measured temperature of each of the electrical component and the two or more additional electrical components measured in the state and corrected by an offset value depending on the state.

That is, depending on the state of the electrical component and the two or more additional electrical components, the measured temperature of each of the electrical component and the two or more additional electrical components used for determining the presence of the heat source is corrected by the offset value or not. The offset value and whether correction by the offset value is done may be as described herein. In other words, the data processing unit may be configured to use, for determining the presence of the heat source, the measured temperature of each of the electrical component and the two or more additional electrical components measured in the state and corrected by an offset value depending on the state.

Optionally, the data processing unit is configured to determine an error state of one of the electrical component and the one or more additional electrical components in the area, in case a temporal courses of the measured temperature of each of the electrical component and the one or more electrical components measured in a common state different to the on-state of the respective electrical component are within a common range and a temporal course of the measured temperature of said one electrical component measured in the on-state of said electrical component differs by a set extent from the temporal course of the measured temperature of the other electrical component(s ) of the electrical component and the one or more additional electrical components measured in the on-state of the respective electrical component, the electrical component and the one or more additional electrical components being in the on-state are operated in a common operation state.

The set extent is greater than a difference of the temporal course within the common range. The error state of an electrical component may comprise for example a state in which a thermal connection between the internal temperature sensor and a cooling body of the electrical component is disturbed or reduced, a state in which dust is present on the printed circuit board of the electrical component, on which the internal temperature sensor may be arranged; and/or any other error of the electrical component that causes an increase of the internal temperature of the electrical component.

Optionally, the data processing unit is configured to use the measured temperature of the electrical component and the one or more additional electrical components measured in the common state and corrected by a offset value depending on the common state of the respective electrical component, and/or the measured temperature of the electrical component and the one or more additional electrical components measured in the on-state and corrected by a offset value depending on the common operation state of the respective electrical component.

In other words, the data processing unit is configured to use, for determining the error state, the measured temperature of the electrical component and the one or more additional electrical components measured in the common state and corrected by a offset value depending on the common state of the respective electrical component, and/or the measured temperature of the electrical component and the one or more additional electrical components measured in the on-state and corrected by a offset value depending on the common operation state of the respective electrical component. The offset value and whether correction by the offset value is done may be as described herein.

Optionally the electrical component is a lighting means driver configured to drive lighting means, such as one or more LEDs. Optionally the one or more additional electrical components are a lighting means driver configured to drive lighting means, such as one or more LEDs. That is, each of the one or more additional electrical components may be a lighting means driver configured to drive lighting means, such as one or more LEDs.

The present invention is not limited to a specific type of lighting means. The abbreviation "LED" stands for light emitting diode. The present invention is not limited to a specific type of LED. In case the lighting means are one or more LEDS, the lighting means driver may be referred to as "LED driver". Other examples of the electrical component may comprise a communication module, such as a wireless communication module (e.g. a radio communication module), a motor for blinds for controlling how much sunlight may enter through a window on which the blinds are installed etc.

In order to achieve the lighting system according to the first aspect of the present invention, some or all of the above described optional features may be combined with each other.

According to a second aspect of the invention, a method for determining an ambient temperature of an electrical component of a lighting system is provided. The electrical component comprises an internal temperature sensor for obtaining an internal temperature of the electrical component resulting from an operation of the electrical component in an on-state. The method comprises measuring, by the internal temperature sensor, a temperature. The method comprises determining, by a data processing unit, using the measured temperature of the electrical component an ambient temperature of an area in which the lighting system is installed.

The above description with regard to the lighting system according to the first aspect of the present invention is also valid for the method according to the second aspect of the present invention.

All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed figures in which
- **Figure 1**: shows an example of a lighting system according to the present invention,
- **Figure 2**: shows an example of a method according to the present invention for determining an ambient temperature of an electrical component of a lighting system,
- **FIGs. 3A and 3B**: each show an example of an implementation form of the lighting system of FIG. 1,
- **FIG. 4**: shows an example of an implementation form of the lighting system of FIG. 3B,
- **FIG. 5**: shows an example of temperatures measured in the lighting system of FIG. 4 over time, and
- **FIG. 6**: shows an example of calibration measurements and temperatures measured at different locations in a lighting system according to the present invention.

In the Figures, corresponding elements have the same reference signs. The size of elements in the Figures is not to scale and may be different compared to a real life implementation in order to highlight details of the embodiments.

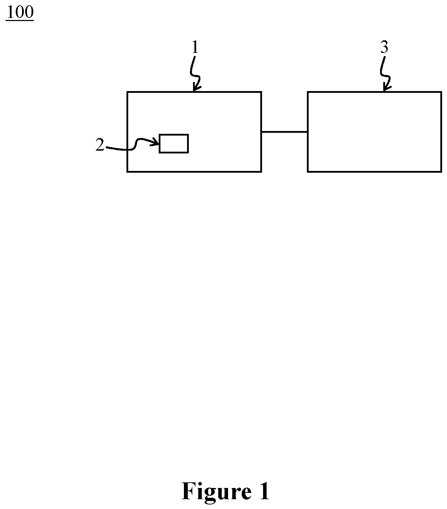

**Figure 1** shows an example of a lighting system according to the present invention. The lighting system of FIG. 1 is an example of the lighting system according to the first aspect of the invention. Thus, the description of the lighting system according to the first aspect of the invention is correspondingly valid for the lighting system of FIG. 1.

The lighting system 100 of FIG. 1 comprises an electrical component 1 with an internal temperature sensor 2 for obtaining an internal temperature of the electrical component 1 resulting from an operation of the electrical component 1 in an on-state of the electrical component 1. As indicated by the box "2" representing the internal temperature sensor being arranged inside the box "1" representing the electrical component, the internal temperature sensor 2 is arranged inside the electrical component 1, e.g. inside a housing of the electrical component 1. The electrical component 1 may be for example a lighting means driver configured to drive lighting means, such as a LED driver configured to driver one or more LEDs. The present invention is not limited to the electrical component 1 being a lighting means driver and, thus, the electrical component 1 may be a different component. For example, the electrical component 1 may be a communication module, such as a wireless communication module (e.g. a radio communication module), a motor for blinds for controlling how much sunlight may enter through a window on which the blinds are installed etc. In the following description, it is assumed that the electrical component 1 is a lighting means driver. The description is accordingly valid when the electrical component 1 is a different component.

As shown in FIG. 1, the lighting system 100 comprises a data processing unit 3. The data processing unit 3 is configured to determine, using a temperature measured by the internal temperature sensor 2 of the electrical component 1, an ambient temperature of an area in which the lighting system 100 is installed. That is, the data processing unit 3 is configured to obtain, i.e. receive, the temperature measured by the internal temperature sensor 2 of the electrical component 1 from the electrical component 1. The electrical component 1 and the data processing unit 3 may be configured to communicate with each other. The communication may be according to any know method. They may be configured to communicate wirelessly and/or wired. The data processing unit 3 may be or may comprise at least one of a controller, microcontroller, processor, microprocessor, application specific integrated circuit (ASIC), and field programmable gate array (FPGA).

The data processing unit 3 may be configured to determine that, in case the electrical component 1 is in a current state for a time smaller than a time threshold, the ambient temperature equals the measured temperature (measured by the internal temperature sensor 2) corrected by an offset value. The current state may be an on-state or a standby-state. When thermal energy provided by the electrical component 1, being in the current state for the time being smaller than the time threshold is smaller than a thermal energy threshold and, thus, negligible, the offset may be zero.

The data processing unit 3 may be configured to use as the offset value a temperature value that depends on a current state of the electrical component 1, one or more directly previous states of the electrical component 1, a time during which the electrical component 1 is in the current state, and a time during which the electrical component 1 was in a respective previous state of the one or more directly previous states.

For example, the electrical component 1 may be in different operation states when being in the on-state, wherein during the different operation states the electrical component 1 provides different amounts of thermal energy. The internal temperature of the electrical component 1 may be considered equaling the temperature of the area in which the lighting system may be installed (i.e. temperature outside the electrical component 1) and, thus, the ambient temperature of the lighting system 100 at the location of the electrical component 1 plus an additional temperature being caused by the thermal energy provided by the electrical component 1 when being in the standby-state or when being operated in the on-state. Thus, the greater the thermal energy provided by the electrical component 1 the greater the deviation between the temperature measured by the internal temperature sensor 2 of the electrical component 1 and the ambient temperature and vice versa. Therefore, when the electrical component 1 is in the off-state and, thus, does not provide thermal energy due to its operation, the temperature measured by the internal temperature sensor 2 may equal the ambient temperature.

That is, the data processing unit 3 may be configured to determine that, when the electrical component is in the off-state for a time equal to or greater than the time threshold, the ambient temperature equals the measured temperature. The time threshold may equal a time after which the internal temperature of the electrical component 1 has equalized to a temperature of the area in which the lighting system 100 may be installed (i.e. the temperature outside the electrical component), the time starting at a point in time when operation of the electrical component 1 in an operation state of maximum thermal energy has stopped. The operation state of maximum thermal energy is the operation state among operations states of the electrical component 1 in which the electrical component provides maximum thermal energy.

As outlined above, the temperature measured by the internal temperature sensor 2 may equal a first part caused by the electrical component 1 (e.g. by operation in the on-state or standby-state of the electrical component 1) and a second part caused by the environment. The second part equals the temperature of the area in which the lighting system 100 may be installed (i.e. the temperature outside the electrical component 1) and, thus, the ambient temperature of the lighting system 100 at the location of the electrical component 1. The temporal course of the second part of the measured temperature may follow the temporal course of the area in which the lighting system 100 may be installed (i.e. temperature outside the electrical component 1) by a time delay, wherein the time delay depends on the implementation of the electrical component 1, such as shape of the electrical component 1, position within the electrical component 1 (e.g. within the housing of the electrical component 1), material(s) used for implementing the electrical component 1 (e.g. thermal conductivity of the used material(s)), etc. Namely, the aforementioned characteristics of the electrical component 1 have an influence on how fast the internal temperature inside the electrical component 1 at the location of the internal temperature sensor 2 aligns to the temperature outside the electrical component 1 assuming that the electrical component 1 itself does not influence said alignment process by providing thermal energy.

In order to consider the aforementioned first part of the temperature measured by the internal temperature sensor 2, the thermal energy provided by the electrical component 1 in a current state of the electrical component 1, the time during which the electrical component 1 is in the current state, the thermal energy provided by the electrical component 1 in one or more directly previous states of the electrical component 1 and the time during which the electrical component 1 was in a respective previous state of the one or more directly previous state are considered by the data processing unit 3. The data processing unit 3 does this by correcting the temperature measured by internal temperature sensor 2 of the electrical component 1 with a offset value depending on the aforementioned parameters, as outline herein.

For example, assuming the electrical component 1 switches in an on-state from an operation state of maximum thermal energy to an operation state in which 50% of the maximum thermal energy are caused by the operation of the electrical component 1, the first part of the temperature measured by the internal temperature sensor 2 will be different depending at what time after the operation state change the temperature is measured by internal temperature sensor 2. In case the temperature is measured directly after the operation state change, the first part of the measured temperature will equal the maximum thermal energy, wherein in case the temperature is measured after a time sufficient for the thermal energy caused by the maximum thermal operation to have been removed, the first part of the measured temperature will equal the 50% of the maximum thermal energy.

The data processing unit 3 may be configured to determine that, when the electrical component is in an off-state for a time equal to or greater than the time threshold, the ambient temperature equals the measured temperature. The time threshold may equal a time after which the internal temperature of the electrical component has equalized to a temperature of the area in which the lighting system 100 may be installed (i.e. the temperature outside the electrical component 1), the time starting at a point in time when operation of the electrical component 1 in an operation state of maximum thermal energy has stopped. When the internal temperature of the electrical component 1 has equalized to the ambient temperature then the temperature measured by the internal temperature sensor 2 in the off-state of the electrical component 1 allows a direct conclusion on the ambient temperature of the area in which the lighting system 100 is installed.

The data processing unit 3 may be configured to determine that the electrical component 1 is in the off-time for the time equal to or greater than the time threshold by measuring time (e.g. using an internal clock of the electrical component 1), and/or by evaluating a temporal increase of the measured temperature after the state of the electrical component 1 changes from the off-state to the on-state. For example, the data processing unit 3 may be configured to determine that the ambient temperature equals the measured temperature measured by the internal temperature sensor 2 of the electrical component 1 when the electrical component 1 is turned from the off-state to the on-state after the electrical component 1 has been in the off-state for the time equal to or greater than the time threshold.

The electrical component 1 having been in the off-state for the time equal to or greater than the time threshold and, thus, having been cooled down so that the temperature measured by the internal temperature sensor 2 equals the ambient temperature may be derived from a temporal course of the measured temperature, as such a temporal course shows a characteristic curve, especially increase, of the measured temperature when the electrical component 1 is switched from such an off-state to an on-state. Thus, by evaluating the temperature increase after turning on the electrical component 1, the data processing unit 3 can determine whether the electrical component 1 has been in the off-state sufficient long enough so that the temperature measured by the internal temperature sensor 2 allows a direct conclusion on the ambient temperature.

A state of the electrical component 1 being a lighting means driver may comprise as different operation states different dimming level states. A dimming level may be between 0% and 100%, wherein the greater the dimming level the more electrical energy is supplied by the lighting means driver to the lighting means and, thus, the greater the light intensity of the light emitted by the lighting means and vice versa. At a dimming level of 0% the lighting means driver does not supply electrical energy to the lighting means for light emission and, thus, the lighting means do not emit light. At a dimming level of 100% the lighting means driver provides a maximum electrical energy to the lighting means for light emission and, thus, the lighting means emit light of maximum light intensity. The greater the dimming level, the greater the thermal energy provided by operation of the lighting means driver and vice versa.

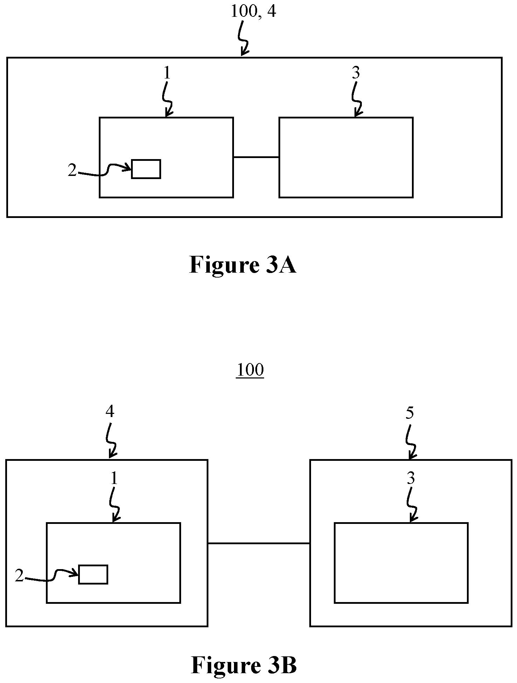

The offset value may be obtained or set by simulation and/or calibration. The calibration may be performed after installation of the lighting system 100. The calibration may be performed one or more times, optionally in periodic intervals. For the calibration actual separate temperature sensor device(s) may be used in order to identify a difference between the temperature measured by the internal temperature sensor 2 of the electrical component 1 at an installation location of the electrical component 1 in the lighting system and the temperature outside the electrical component 1 at the installation location. This identified difference may be used for setting the offset value. The offset value may refer to or be provided relative to a casing temperature of the housing of the electrical component 1 in which the internal temperature sensor 2 is arranged. The calibration of the offset value may be performed for the electrical component 1 per se or when the electrical component 1 is arranged inside the housing of another device, e.g. a luminaire (as exemplarily shown in Figures 3A and 3B).

The data processing unit 3 may have access to a data base, e.g. look up table, comprising for different value combinations of the current state of the electrical component, one or more directly previous states of the electrical component, a time during which the electrical component is in the current state, and a time during which the electrical component was in a respective previous state of the one or more directly previous states a respective offset value. The aforementioned data may be associated with the electrical component 1, optionally with characteristics of the electrical component 1 and/or an installation location of the electrical component 1 within the lighting system. For example, the data base may comprise for different operation states ,e.g. dimming level states, different offset values for the correction. The different values for the different operation states, e.g. different dimming levels, may be interpolated. The data base may be stored in a data storage. The data storage may be part of the data processing unit 3 or an external data storage, wherein the data processing unit 3 is configured to access said external data storage. In addition or alternatively, the data processing unit 3 may use algorithms for computing the offset value for correction using the information on the current state of the electrical component, one or more directly previous states of the electrical component, a time during which the electrical component is in the current state, and a time during which the electrical component was in a respective previous state of the one or more directly previous states.

Implementation forms of the lighting system 100 of FIG. 1 are shown in FIGs. 3A and 3B. For further details, e.g. optional implementation forms and/or features, reference is made to the following description of FIGs. 3A, 3B, 4, 5 and 6.

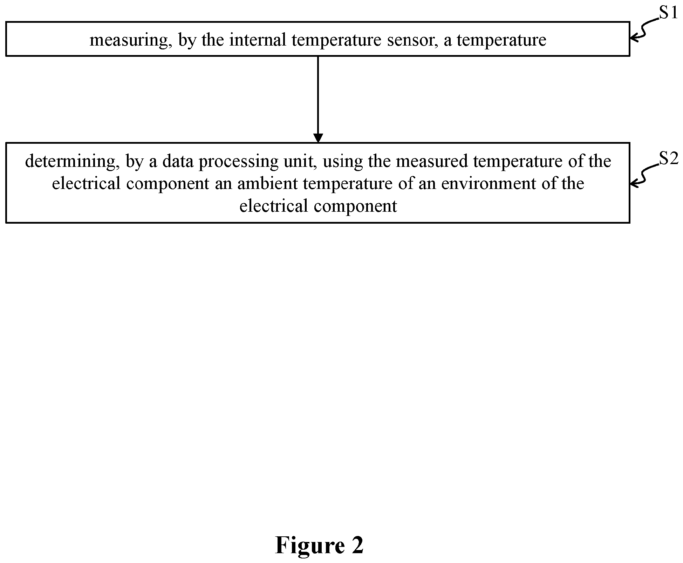

**Figure 2** shows an example of a method according to the present invention for determining an ambient temperature of an electrical component of a lighting system. The method of FIG. 2 is an example of the method according to the second aspect of the invention. Thus, the description of the method according to the second aspect of the invention is correspondingly valid for the method of FIG. 2.

The method of FIG. 2 is a method for determining an ambient temperature of an electrical component of a lighting system. The electrical component comprises an internal temperature sensor for obtaining an internal temperature of the electrical component resulting from an operation of the electrical component in an on-state. The electrical component and the lighting system may be the electrical component 1 and the lighting system 100, respectively, of FIG. 1. The method comprises a step S1 of measuring, by the internal temperature sensor, a temperature. The method comprises a step S2 of determining, by a data processing unit, using the measured temperature of the electrical component an ambient temperature of an area in which the lighting system is configured to be installed. The data processing unit may be the data processing unit 3 of FIG. 1. The lighting system of FIG. 1 is configured to perform the method of FIG. 2.

**FIGs. 3A and 3B** each show an example of an implementation form of the lighting system of FIG. 1.

According to the example of FIG. 3A, the lighting system 100 may be a luminaire 4, and the electrical component 1 and the data processing unit 3 are a part of the luminaire 4. The aforementioned data storage may be part of the luminaire 4. The electrical component 1 and the data processing unit 3 may be arranged inside a housing of the luminaire 4. Optionally, the data storage may be arranged inside the housing of the luminaire 4.

According to the example of FIG. 3B, the electrical component is a part of a luminaire 4, and the data processing unit is a part of a lighting management systems configured to control the luminaire 4. The electrical component 1 may be arranged inside a housing of the luminaire 4. The lighting management system 5 may be a central control unit. The central control unit may be or may comprise at least one of a controller, microcontroller, processor, microprocessor, application specific integrated circuit (ASIC), and field programmable gate array (FPGA). The data processing unit 3 may be arranged inside a housing of the central control unit. The lighting management system 5 and the luminaire 4 may be configured to communicate with each other. The communication may be wireless and/or wired. The communication may be according to any known method. The lighting management system 5, optionally the central control unit, may comprise the aforementioned data storage. The data storage may be arranged inside the housing of the central control unit.

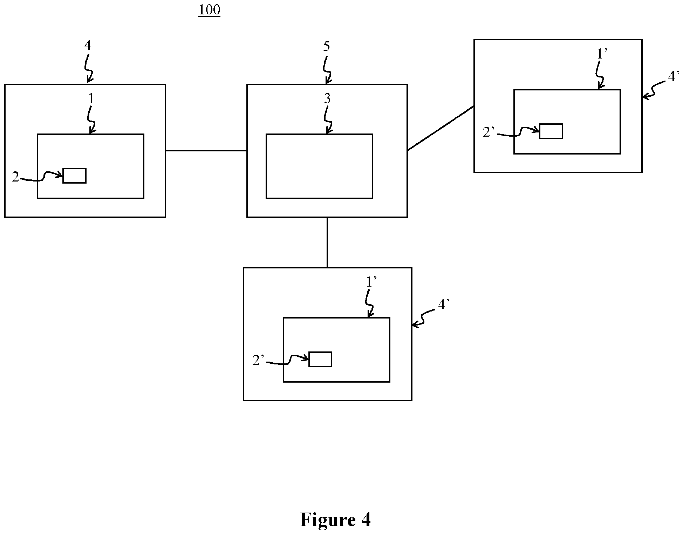

**FIG. 4** shows an example of an implementation form of the lighting system of FIG. 3B. The description of FIGs. 1 and 3B are correspondingly valid for the lighting system of FIG. 4, wherein in the following mainly additional details, especial optional features, are described. The following description is correspondingly valid for the implementation form of the lighting system of FIG. 3A, that differs from the implementation form of FIG. 3B in that the lighting system of FIG. 3A is the luminaire 4 and the luminaire 4 comprises the electrical component 1 and the data processing unit 3. In contrast thereto, the lighting system of FIG. 3B comprise a luminaire 4 and a lighting management system 5, wherein the luminaire 4 comprise the electrical component 2 and the lighting management system 5 comprises the data processing unit 3.

As shown in FIG. 4, two additional electrical components 1' (in addition to the electrical component 1 of the luminaire 4 of the lighting system 100) may be arranged in the area in which the luminaire 4 is configured to be installed. Each of the two electrical component 1' comprises an internal temperature sensor 2' for obtaining an internal temperature of the respective electrical component resulting from an operation of the respective electrical component in an on-state. The description of the electrical component 1 and the internal temperature sensor 2 of FIG. 1 may be correspondingly valid for each of the additional electrical component 1'. The number of additional electrical components 1' shown in FIG. 4 is only by way of example and, thus, may be different. That is, one or more additional electrical components 1' may be arranged in the area in which the luminaire 4 may be installed. The description of FIG. 4 is correspondingly valid in case of a different number of additional electrical components 1'.

According to the example of FIG. 4, each of the two additional electrical components 1' is part of a respective luminaire 4'. This is only by way of example and, thus, at least one of the additional electrical components 1' may be per se (i.e. not arranged inside another device) or be part of a different device. In the example of FIG. 4, it may be assumed that each of the electrical component 1 and the additional electrical components 1' is a lighting means driver configured to drive lighting means, e.g. one or more LEDs. This is only by way of example and, thus, at least one of the electrical component 1 and the additional electrical components 1' may be a different entity, such as a communication module.

The additional electrical components 1' and, thus, the optional additional luminaires 4' optionally comprising them may be part of the lighting system 100. This is not valid in case of the lighting system 100 of FIG. 3A, which is the luminaire 4, as shown in Figure 3A. Nevertheless, in case of the implementation form of Figure 3A the luminaire 4 and the additional luminaires 4' may form a system.

The electrical component 1, the additional electrical component 1' and the data processing unit 3 may be configured to communicate with each other, e.g. wirelessly and/or wired. Accordingly, the luminaires 4 and 4' and the lighting management system 5 may be configured to communicate with each other, e.g. wirelessly and/or wired. The communication may be according to any known methods.

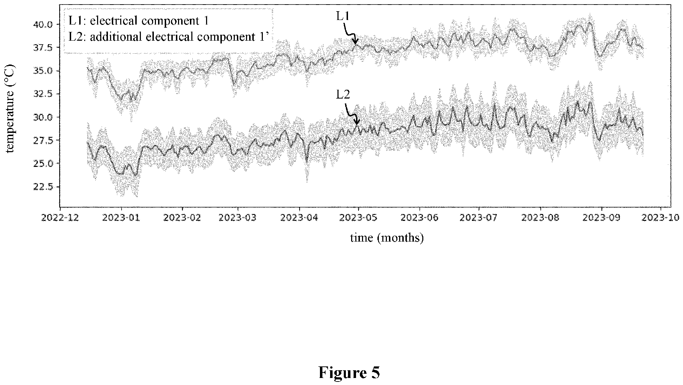

**FIG. 5** shows an example of temperatures measured in the lighting system of FIG. 4 over time. The vertical axis of the graph of FIG. 5 represents the temperature in degrees Celsius (°C) and the horizontal axis of the graph of FIG. 5 represents the time in months, e.g. between December 2022 (2022-12) and October 2023 (2023-10). The curve L1 shows an example of the temporal course of the temperature measured by the internal temperature sensor 2 of the electrical component 1 and the curve L2 shows an example of the temporal course of the temperature measured by the internal temperature sensor 2' of one of the electrical components 1' of FIG. 4. As can be seen from FIG. 5, the curves L1 and L2 show a similar behavior of the measured temperature over time. For example, both curves L1 and L2 indicate a greater temperature in the summer months compared to the winter months. According to the example of FIG. 5, the temperature measured by the electrical component 1 is generally greater than the temperature measured by the additional electrical component 1'. This may be due to e.g. the electrical component 1 being installed at a location near a heat source, wherein the additional electrical component 1' is installed at a location distant to the heat source. In addition or alternatively, the electrical component 1 may provide more thermal energy when being operated and optionally in a standby-state compared to the additional electrical component 1'. Thus, in order to determine, e.g. estimate, the ambient temperature of the area in which the lighting system 100 and, thus, the electrical component 1 and the additional electrical components 1' are installed, the data processing unit 3 may be configured to combine the temperature measurements of the electrical component 1 and the additional electrical components 1'. For the example of FIG. 5, the electrical components 1 and 1' may be assumed to be in a standby-state. Optionally, at least one of the curves L1 and L2 may represent the mean of temperature measurements by multiple electrical components according to the invention, i.e. electrical component that are implemented in line with the electrical component 1 of FIG. 1.

The data processing unit 3 of Figure 4 may be configured to receive a measured temperature of each of the electrical component 1 and the two additional electrical components 1'. That is, the data processing unit 3 may be configured to receive a temperature measured by the internal temperature sensor 2/2' of each of the electrical component 1 and the two additional electrical components 1'. The data processing unit may be configured to determine (when the luminaire 4 and the additional electrical component 1' are installed in the area) the ambient temperature of the area by computing a mean of the measured temperatures of the electrical component 1 and the additional electrical components 1'. Optionally, the data processing unit 3 is configured to determine that the ambient temperature of the area equals the mean of the measured temperatures, the mean being corrected by a common offset value. The correction by the common offset value may be done for the reasons outlined herein with regard to the offset value for a temperature measured by an internal temperature sensor of a single electrical component.

The common offset value may be obtained as described herein with regard to the offset value for a temperature measured by an internal temperature sensor of a single electrical component. That is, the common offset value may be obtained or set by simulation and/or calibration. The calibration may be performed after installation of the lighting system 100. The calibration may be performed one or more times, optionally in periodic intervals. For the calibration actual separate calibration temperature sensor device(s) (not shown in FIG. 4) may be used for measuring the temperature of the area at the location of each of the electrical component 1 and the additional electrical components 1' and computing a mean of such calibration temperature measurements (i.e. mean of the temperatures measured by the separate calibration temperature sensor device (s)) in order to identify a difference between the mean of the temperatures measured by the electrical component 1 and the additional electrical components 1' and the mean of the calibration temperature measurements. This identified difference may be used for setting the common offset value.

The data processing unit may be configured to determine that the ambient temperature of the area equals the mean of the measured temperatures each being corrected by a respective offset value.

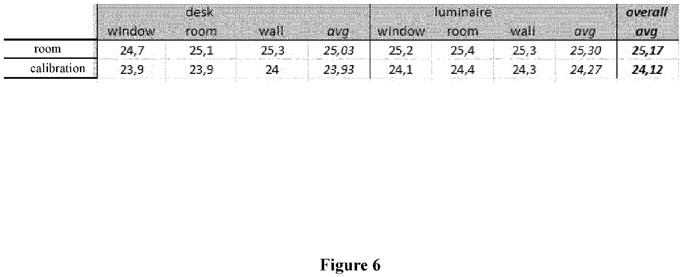

**FIG. 6** shows an example of calibration measurements and temperatures measured at different locations in a lighting system according to the present invention. In the example of FIG. 6, the temperature measurement by one of the electrical component 1 and the electrical components 1' is calibrated for being used in a room comprising a luminaire at the ceiling and a desk on the ground. It is assumed that the electrical component 1 is calibrated with regard to the internal temperature sensor. This is only by way of example. The electrical component 1 may be installed inside the aforementioned luminaire or installed within the luminaire 4 as an additional luminaire. The following description is applicable for both cases. The electrical component 1 is placed at the height of the desk near a window of the room, in the middle of the room and near a wall of the room as well as at the height of the luminaire (i.e. the ceiling) near the window, in the middle of the room and the wall and in each of the aforementioned locations the temperature measured by the internal temperature sensor 2 of the electrical component 1 is recorded. These measurements are shown in the row "room" of the table of FIG. 6. The mean of the temperature measurements of the electrical component 1 at the height of the desk and the mean of the measurements of the electrical component 1 at the height of the luminaire (i.e. ceiling) are computed and are indicated in the respective column "avg". The overall mean of the aforementioned two mean temperatures is computed as indicated in the column "overall avg". This value may represent the ambient temperature of the room (i.e. area) in which the electrical component 1 may be installed.

For the calibration a separate calibration temperature sensor device may be arranged at the aforementioned different locations of the room, i.e. at the window, in the middle of the room and the wall of the room at the height of the desk and at the height of the luminaire (i.e. ceiling). The measured temperatures by the separate calibration temperature sensor device at these locations are shown in the row "calibration" of the table of FIG. 6. The mean of the calibration temperature measurements of the separate calibration temperature sensor device at the height of the desk and the mean of the calibration temperature measurements of the separate calibration temperature sensor device at the height of the luminaire (i.e. ceiling) are computed and are indicated in the respective column "avg". The overall mean of the aforementioned two calibration mean temperatures is computed as indicated in the column "overall avg". The deviation between the overall mean of the temperature measurements by the electrical component 1 and the overall mean of the temperature measurement by the separate calibration temperature sensor device may be used as the common offset value for correction. According to FIG. 6, the common offset may equal e.g. 25,17°C - 24,12°C = 1,05°C. This common offset may be due to thermal energy provided by the electrical component 1 in an on-state or standby-state.

The data processing unit 3 of FIG. 4 may be configured to determine presence of a heat source at a location of one of the electrical component 1 and the two additional electrical components 1' in the area in which the lighting system 100 is installed in case a temporal course of the measured temperature of said one electrical component measured in a state of said one electrical component differs from the temporal course of the measured temperature of each of the other electrical components of the electrical component 1 and the two additional electrical components 1' measured in the same state of the respective electrical component, wherein the electrical component 1 and the two additional electrical components 1' being each configured to provide, when being in the state, same thermal energy.

That is, assuming that each of the electrical component 1 and the two additional electrical components 1' is configured to provide the same thermal energy when being in a common state, then a deviation of the temporal course of the measured temperature by one of said electrical components from the temporal course of the measured temperature of each of the other electrical components may indicate a heat source at the location of the one electrical component. For example, under the aforementioned assumption, when the electrical component 1 is installed near a heater and the two additional electrical components 1' are installed far away from the heater, then a deviation of the temporal course of the temperature measured by the internal temperature sensor 2 of the electrical component 1 from the temporal course of the temperature measured by the internal temperature sensor 2' of the two additional electrical components 1' may indicate presence of the heater at the location of the electrical component 1 and activation of the heater. That is, the data processing unit 3 may determine that at the location of the electrical component 1 a heat source is present. For the aforementioned determination, the data processing unit may be configured to use the measured temperature of each of the electrical component 1 and the two additional electrical components 1' measured in the common state and corrected by an offset value depending on the state. The offset value may be obtained as described herein.

The data processing unit 3 may be configured to determine an error state of one of the electrical component 1 and the additional electrical components 1' in the area in which the lighting system 100 is installed, in case a temporal courses of the measured temperature of each of the electrical component 1 and the electrical components 1' measured in a common state different to the on-state of the respective electrical component are within a common range and a temporal course of the measured temperature of said one electrical component measured in the on-state of said electrical component differs by a set extent from the temporal course of the measured temperature of the other electrical components of the electrical component 1 and the additional electrical components 1' measured in the on-state of the respective electrical component, wherein the electrical component 1 and the additional electrical components 1' being in the on-state are operated in a common operation state. For example, assuming that the electrical component 1 is in an error state and, thus, more thermal energy is provided by the electrical component 1, then the data processing unit 3 may determine this in case the temporal course of the measured temperature of each of the electrical component 1 and the electrical components 1' measured in a common state different to the on-state of the respective electrical component are within a common range and a temporal course of the measured temperature of the electrical component 1 measured in the on-state differs by the set extent from the temporal course of the measured temperature of the two additional electrical components 1' measured in the on-state of the respective electrical component.

The data processing unit 3 may be configured to use the measured temperature of the electrical component 1 and the additional electrical components 1' measured in the common state and corrected by a offset value depending on the common state of the respective electrical component, and/or the measured temperature of the electrical component 1 and the additional electrical components 1' measured in the on-state and corrected by a offset value depending on the common operation state of the respective electrical component.

By using the multiple electrical components 1 and 1' of the lighting system 100 of FIG. 4 for determining the ambient temperature of the area (e.g. room) in which the lighting system 100 is installed, a region of the area with an increased cooling or heating may be determined. This information may be used to reduce the cooling or heating, respectively, in said region to adapt the temperature in said region to the temperature of the rest of the area.

The lighting management system 5, optionally the data processing unit 3, may use the temperature measurements from the internal temperature sensors 2 of the different electrical components 1 and 1' for an error prevention within at least one of said electrical components 1 and 1' and optionally the luminaires 4 and 4'; and/or for monitoring of the conditions of the luminaires 4 and 4'. For example, by scanning the temperature data provided from the electrical components 1 and 1' for unusual signatures, such as electrical components with drifting temperatures or other measured parameters, the lighting management system 5, optionally the data processing unit 3, may identify potential issues or failures in advance. This proactive approach allows for timely intervention and maintenance, improving the overall reliability of the lighting system 100. The lighting management system 5 knows the installation locations of the luminaires 4 and 4'. The lighting management system 5 may obtain the measured temperatures and, thus, the ambient temperature at the different locations of the luminaires 4 and 4' as outlined above and optionally report them to connected systems via communication interfaces (APIs, BACnet, etc.). The term "API" stands for application programming interface, and the term "BACnet" stands for a communication protocol for building automation and control (BAC) networks.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A lighting system (100) comprising
- an electrical component (1) with an internal temperature sensor (2) for obtaining an internal temperature of the electrical component (1) resulting from an operation of the electrical component (1) in an on-state of the electrical component (1), and
- a data processing unit (3), wherein
- the data processing unit (3) is configured to determine, using a temperature measured by the internal temperature sensor (2) of the electrical component (1), an ambient temperature of an area in which the lighting system (100) is installed.

2. The lighting system (100) according to claim 1, wherein
- the data processing unit (3) is configured to determine that, in case the electrical component (1) is in a current state for a time smaller than a time threshold, the ambient temperature equals the measured temperature corrected by an offset value.

3. The lighting system (100) according to claim 1 or 2, wherein
- the data processing unit (3) is configured to determine that, when the electrical component (1) is in an off-state for a time equal to or greater than the time threshold, the ambient temperature equals the measured temperature.

4. The lighting system (100) according to claim 3, wherein the data processing unit (3) is configured to determine that the electrical component (1) is in the off-time for the time equal to or greater than the time threshold by
- measuring time, and/or
- evaluating a temporal increase of the measured temperature after the state of the electrical component (1) changes from the off-state to the on-state.

5. The lighting system (100) according to any one of claim 2 to 4, wherein the data processing unit (3) is configured to use as the offset value a temperature value that depends on at least one of
- a current state of the electrical component (1),
- one or more directly previous states of the electrical component (1),
- a time during which the electrical component (1) is in the current state, and
- a time during which the electrical component (1) was in a respective previous state of the one or more directly previous states.

6. The lighting system (100) according to any one of the previous claims, wherein
- the lighting system (100) is a luminaire (4), and
- the electrical component (1) and the data processing unit (3) are a part of the luminaire (4).

7. The lighting system (100) according to any one of claims 1 to 5, wherein
- the electrical component (1) is a part of a luminaire (4), and
- the data processing unit (3) is a part of a lighting management system (5) configured to control the luminaire (4).

8. The lighting system (100) according to claim 6 or 7, wherein the data processing unit (3) is configured to
- receive a measured temperature of one or more additional electrical components (1') arranged in an area in which the luminaire (4) is configured to be installed, each of the one or more additional electrical components (1') comprising an internal temperature sensor (2') for obtaining an internal temperature of the respective electrical component (1') resulting from an operation of the respective electrical component (1') in an on-state, and
- determine, when the luminaire (4) is installed in the area, the ambient temperature of the area by computing a mean of measured temperatures of the electrical component (1) and the one or more additional electrical components (1').

9. The lighting system (100) according to claim 8, wherein the data processing unit (3) is configured to determine that
- the ambient temperature of the area equals the mean of the measured temperatures, the mean being corrected by a common offset value, or
- the ambient temperature of the area equals the mean of the measured temperatures each being corrected by a respective offset value.

10. The lighting system (100) according to claim 8 or 9, wherein
- the data processing unit (3) is configured to determine presence of a heat source at a location of one of the electrical component (1) and the two or more additional electrical components (1') in the area in case a temporal course of the measured temperature of said one electrical component measured in a state of said one electrical component (1) differs from the temporal course of the measured temperature of each of the other electrical components of the electrical component (1) and the two or more additional electrical components (1') measured in the same state of the respective electrical component, wherein the electrical component (1) and the two or more additional electrical components (1') being each configured to provide, when being in the state, same thermal energy.

11. The lighting system (100) according to claim 10, wherein
- the data processing unit (3) is configured to use the measured temperature of each of the electrical component (1) and the two or more additional electrical components (1') measured in the state and corrected by an offset value depending on the state.

12. The lighting system (100) according to any one of claims 8 to 11, wherein
- the data processing unit (3) is configured to determine an error state of one of the electrical component (1) and the one or more additional electrical components (1') in the area, in case
- a temporal courses of the measured temperature of each of the electrical component (1) and the one or more electrical components (1') measured in a common state different to the on-state of the respective electrical component are within a common range and
- a temporal course of the measured temperature of said one electrical component measured in the on-state of said electrical component differs by a set extent from the temporal course of the measured temperature of the other electrical component(s ) of the electrical component (1) and the one or more additional electrical components (1') measured in the on-state of the respective electrical component, the electrical component (1) and the one or more additional electrical components (1') being in the on-state are operated in a common operation state.

13. The lighting system (100) according to claim 12, wherein the data processing unit is configured to use
- the measured temperature of the electrical component (1) and the one or more additional electrical components (1') measured in the common state and corrected by a offset value depending on the common state of the respective electrical component, and/or
- the measured temperature of the electrical component (1) and the one or more additional electrical components (1') measured in the on-state and corrected by a offset value depending on the common operation state of the respective electrical component.

14. The lighting system (100) according to any one of the previous claims, wherein
- the electrical component (1), and optionally the one or more additional electrical components (1'), is/are a lighting means driver configured to drive lighting means, such as one or more LEDs.

15. A method for determining an ambient temperature of an electrical component of a lighting system, the electrical component comprising an internal temperature sensor for obtaining an internal temperature of the electrical component resulting from an operation of the electrical component in an on-state, wherein the method comprises
- measuring (S1), by the internal temperature sensor, a temperature, and
- determining (S2), by a data processing unit, using the measured temperature of the electrical component an ambient temperature of an area in which the lighting system is configured to be installed.
